# EUROPEAN PATENT SPECIFICATION

(11) **EP 3 371 246 B1**
(45) Date of publication and mention of the grant of the patent: **02.10.2019**
(21) Application number: 16794877.7
(22) Date of filing: 01.11.2016
(51) Int. Cl.: C08G 77/08, C08K 5/54, C08G 77/16

(54) **METHOD OF PREPARING ORGANOPOLYSILOXANE**
VERFAHREN ZUR HERSTELLUNG VON ORGANOPOLYSILOXAN
PROCÉDÉ DE PRÉPARATION D'ORGANOPOLYSILOXANE

(30) Priority: 04.11.2015 US 201562250600 P
(43) Date of publication of application: 12.09.2018
(73) Proprietor: Dow Silicones Corporation, Midland, MI 48686-0994 (US)
(72) Inventor: ALVAREZ, Jesus Luque, Midland, Michigan 48686-0994 (US); DRAKE, Robert, Penarth CF64 2TW (GB); GAMMIE, Andy, Florence, Kentucky 41042-9346 (US); MINGES, Stephanie, La Grange, Kentucky 40031 (US)
(74) Representative: Murgitroyd & Company
(86) International application number: PCT/US2016/059825
(87) International publication number: WO 2017/079107

(56) References cited:
- EP-A1- 0 258 640
- EP-A1- 0 503 825
- WO-A1-96/02579
- GB-A- 2 252 975
- US-A- 5 773 548

## Description

### FIELD OF THE INVENTION

The present invention generally relates to a method of preparing an organopolysiloxane and, more specifically, to a method of preparing an organopolysiloxane via polymerization of an organopolysiloxane fluid in the presence of a catalyst and a terminating agent.

### DESCRIPTION OF THE RELATED ART

Organosiloxanes and methods of their preparation are known in the art. For example, organopolysiloxane polymers, which are one type of organosiloxane, are commonly formed via cohydrolysis and condensation of monomeric halosilanes. The monomeric halosilanes hydrolyze to give silicon-bonded hydroxyl groups. Silicon-bonded hydroxyl groups of adjacent molecules condense to form siloxane bonds with water as a by-product.

It is generally desirable to control molecular weight and viscosity of organopolysiloxane polymers, as different molecular weights give rise to different physical properties and end use applications. It is difficult when polymerizing monomers to control characteristics of the organopolysiloxane formed therefrom. Moreover, conventional methods require significant volumes of water and result in high volumes of acid byproducts from hydrolyzing halosilanes, which is undesirable.

Document EP 0 258 640 discloses a process wherein a hydroxy-terminated PDMS is polymerised with a phosphonitrile chloride catalyst in the presence of the reaction product of dimethyldichlorosilane and trimethylchlorosilane.

### SUMMARY OF THE INVENTION

The present invention provides a method of preparing an organopolysiloxane. The method comprises polymerizing an organopolysiloxane fluid having at least two silicon-bonded hydroxyl groups per molecule in the presence of a catalyst and a terminating agent to prepare the organopolysiloxane. The terminating agent has the general formula R₃SiX, wherein each R is independently selected from H and a hydrocarbyl group and X is a halogen atom, to provide the organopolysiloxane.

### DETAILED DESCRIPTION OF THE INVENTION

The term "substantial" or "substantially" as used herein to describe any substantially linear organopolysiloxane means that in relation to the notation of MDTQ of an organopolysiloxane, there is less than 5 mole % or less than 2 mole % of the units T and/or Q. The M, D, T, Q designate one (**M**ono), two (**D**i), three (**T**ri), or four (**Q**uad) oxygen atoms covalently bonded to a silicon atom that is linked into the rest of the molecular structure. The M, D, T and Q units are typically represented as RᵤSiO(_{4-u)/2}, where u is 3, 2, 1, and 0 for M, D, T, and Q, respectively, and R is a substituted or unsubstituted hydrocarbon group.

The term "about" as used herein serves to reasonably encompass or describe minor variations in numerical values measured by instrumental analysis or as a result of sample handling. Such minor variations may be in the order of plus or minus 0% to 10% or plus or minus 0% to 5% of the numerical values.

The term "branched" as used herein describes a polymer with more than two end groups.

The term "comprising" is used herein in its broadest sense to mean and to encompass the notions of "include" and "consist of."

The term "ambient temperature" or "room temperature" refers to a temperature between about 20°C and about 30°C. Usually, room temperature ranges from about 20°C to about 25°C.

The use of "for example" or "such as" to list illustrative examples does not limit to only the listed examples. Thus, "for example" or "such as" means "for example, but not limited to" or "such as, but not limited to" and encompasses other similar or equivalent examples.

All viscosity measurements referred to herein were measured at 25°C unless otherwise indicated.

An organopolysiloxane is intended to mean a polymer comprising multiple organosiloxane or polyorganosiloxane groups per molecule. Organopolysiloxane is intended to include polymers substantially containing only organosiloxane or polyorganosiloxane groups in the polymer chain, and polymers where the backbone contains both organosiloxane and/or polyorganosiloxane groups and organic polymer groups in the polymer chain. Such polymers may be homopolymers or copolymers, including, for example, block copolymers and random copolymers.

"Hydrocarbyl" means a monovalent hydrocarbon group which may be substituted or unsubstituted. Specific examples of hydrocarbyl groups include alkyl groups, alkenyl groups, alkynyl groups, aryl groups, aralkyl groups, etc.

"Alkyl" means an acyclic, branched or unbranched, saturated monovalent hydrocarbon group. Alkyl is exemplified by, but not limited to, Me, Et, Pr (e.g., iso-propyl and/or n-propyl), Bu (e.g., isobutyl, n-butyl, tert-butyl, and/or sec-butyl), pentyl (e.g., isopentyl, neopentyl, and/or tert-pentyl), hexyl, heptyl, octyl, nonyl, decyl, undecyl, and dodecyl as well as branched saturated monovalent hydrocarbon groups of 6 to 12 carbon atoms. Alkyl groups may have 1 to 30 carbon atoms, alternatively 1 to 24 carbon atoms, alternatively 1 to 20 carbon atoms, alternatively 1 to 12 carbon atoms, alternatively 1 to 10 carbon atoms, and alternatively 1 to 6 carbon atoms.

"Alkylene" means an acyclic, branched or unbranched, saturated divalent hydrocarbon group

"Alkenyl" means an acyclic, branched or unbranched, monovalent hydrocarbon group having one or more carbon-carbon double bonds. Alkenyl is exemplified by, but not limited to, vinyl, allyl, propenyl, and hexenyl. Alkenyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms.

"Alkenylene" means an acyclic, branched or unbranched, divalent hydrocarbon group having one or more carbon-carbon double bonds.

"Alkynyl" means an acyclic, branched or unbranched, monovalent hydrocarbon group having one or more carbon-carbon triple bonds. Alkynyl is exemplified by, but not limited to, ethynyl, propynyl, and butynyl. Alkynyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms.

"Alkynylene" means an acyclic, branched or unbranched, divalent hydrocarbon group having one or more carbon-carbon triple bonds.

"Aryl" means a cyclic, fully unsaturated, hydrocarbon group. Aryl is exemplified by, but not limited to, cyclopentadienyl, phenyl, anthracenyl, and naphthyl. Monocyclic aryl groups may have 5 to 9 carbon atoms, alternatively 6 to 7 carbon atoms, and alternatively 5 to 6 carbon atoms. Polycyclic aryl groups may have 10 to 17 carbon atoms, alternatively 10 to 14 carbon atoms, and alternatively 12 to 14 carbon atoms.

"Arylene" means a cyclic, fully unsaturated, divalent hydrocarbon group.

"Aralkyl" means an alkyl group having a pendant and/or terminal aryl group or an aryl group having a pendant alkyl group. Exemplary aralkyl groups include tolyl, xylyl, mesityl, benzyl, phenylethyl, phenyl propyl, and phenyl butyl.

The term "substituted" as used in relation to another group, e.g. a hydrocarbyl group, means, unless indicated otherwise, one or more hydrogen atoms in the hydrocarbyl group has been replaced with another substituent. Examples of such substituents include, for example, halogen atoms such as chlorine, fluorine, bromine, and iodine; halogen atom containing groups such as chloromethyl, perfluorobutyl, trifluoroethyl, and nonafluorohexyl; oxygen atoms; oxygen atom containing groups such as (meth)acrylic and carboxyl; nitrogen atoms; nitrogen atom containing groups such as amines, amino-functional groups, amido-functional groups, and cyano-functional groups; sulphur atoms; and sulphur atom containing groups such as mercapto groups.

The present invention provides a method of preparing an organopolysiloxane. The inventive method prepares organopolysiloxanes having excellent properties and suitable for use in a variety of end uses and applications, including as a component in compositions, a diluent, a lubricant, to form vibration dampeners, antifoams, release coatings, polymeric additives, etc., as described below.

The method comprises polymerizing an organopolysiloxane fluid having at least two silicon-bonded hydroxyl groups per molecule. The organopolysiloxane prepared via the inventive method is distinguished from the organopolysiloxane fluid that is polymerized via the inventive method. In particular, the organopolysiloxane has a higher molecular weight and greater viscosity than the organopolysiloxane fluid, as described below.

The organopolysiloxane fluid may comprise any combination of M, D, T and/or Q units so long as the organopolysiloxane fluid can be polymerized to prepare the organopolysiloxane. Typically, the organopolysiloxane fluid is branched, alternatively substantially linear, alternatively linear. When the organopolysiloxane fluid is branched or substantially linear, the organopolysiloxane fluid generally includes at least one T and/or Q unit. The silicon-bonded hydroxyl groups may be present in any combination of M, D, and/or T units within the organopolysiloxane fluid.

In certain embodiments, the organopolysiloxane fluid is substantially linear, and comprises D units capped with M units, although even in such embodiments the organopolysiloxane fluid may include at least some branching attributable to the presence of at least some T and/or Q units. Alternatively, in other embodiments, the organopolysiloxane fluid may be linear. In these or other embodiments, the silicon-bonded hydroxyl groups may be independently terminal and/or pendent in the organopolysiloxane fluid. When the organopolysiloxane fluid is substantially linear or linear, the silicon-bonded hydroxyl groups are typically terminal, e.g. at opposite terminal locations.

In specific embodiments, the organopolysiloxane fluid has the general formula:

OHₐR₃₋ₐSi(OSiR₂)_{y}OSiR_{3-b}OH_{b}

wherein a is an integer of 1 to 3, b is an integer of 1 to 3, y is an integer of from 1 to 200, and each R is independently selected from H and a hydrocarbyl group. In certain embodiments, a is 1 or 2 and b is 1 or 2; alternatively, in other embodiments, a is 1 and b is 1. When y is 1, the organopolysiloxane may be considered oligomeric rather than polymeric. In specific embodiments, y is selected from 20 to 50, alternatively 30 to 40. The value of y may be referred to as the degree of polymerization (DP) of the organopolysiloxane fluid.

When R is an independently selected hydrocarbyl group, each R may independently be substituted or unsubstituted. Each R is may be for example, an alkyl group, an alkenyl group, an aryl group, an alkynyl group, an aralkyl group, etc. In certain embodiments, each R is independently selected from a C₁-C₁₀, alternatively a C₁-C₈, alternatively a C₁-C₆, alternatively a C₁-C₄, hydrocarbyl group. In specific embodiments, each R is selected from methyl, ethyl, propyl, and butyl groups, alternatively each R is methyl.

The molecular weight and viscosity of the organopolysiloxane fluid is driven largely by the selection of subscript y and the selections of R. For example, as y increases, the molecular weight and viscosity of the organopolysiloxane fluid increase, all else being equal (e.g. selections of R).

The organopolysiloxane fluid may also include silicon-bonded hydrolyzable groups in addition to the silicon-bonded hydroxyl groups. Such silicon-bonded hydrolyzable groups may hydrolyze to give additional silicon-bonded hydroxyl groups. Specific examples of hydrolyzable groups include H, a halide group, an alkoxy (-OR¹) group, an alkylamino (-NHR¹ or -NR¹R²) group, a carboxy (-OOC-R¹) group, an alkyliminoxy (-O-N=CR¹R²) group, an alkenyloxy (O-C(=CR¹R²)R³) group, or an N-alkylamido (-NR¹COR²) group, wherein R¹, R² and R³ are each independently selected from H and a C₁-C₂₂ hydrocarbyl group. When R¹, R² and R³ are independently C₁-C₂₂ hydrocarbyl groups, R¹, R² and R³ may be linear, branched, or cyclic (for C₃-C₂₂ hydrocarbyl groups). In addition, R¹, R² and R³ may independently include one or more heteroatoms, such as N, O, and/or S, within the hydrocarbyl group, and may be substituted or unsubstituted. Typically, R¹, R² and R³ are each independently selected C₁-C₄ alkyl groups. When the hydrolyzable group is the NR¹R² group, R¹ and R² optionally can be taken together with the N atom to which they are bonded to form a cyclic amino group.

In various embodiment, the organopolysiloxane fluid has a dynamic viscosity of from 0.02 to 150, alternatively from 0.05 to 5, alternatively from 0.08 to 2.5, Pa·s at 25 °C. Methods of measuring dynamic viscosity are well known. Unless otherwise indicated, dynamic viscosity values recited herein are measured via a Brookfield viscometer in accordance with ASTM D4287. In these or other embodiments, the organopolysiloxane fluid has a specific gravity of about 0.97.

Combinations of different organopolysiloxane fluids may be utilized together as the organopolysiloxane fluid in the inventive method.

The organopolysiloxane is polymerized in the presence of a terminating agent. The terminating agent has the general formula R₃SiX, wherein each R is an independently selected and defined above and X is a halogen atom. X may be selected from F, Cl, Br, I, and At, alternatively from F, Cl, and Br, alternatively from F and Cl. In various embodiments, X is Cl. In certain embodiments, each R is an independently selected hydrocarbyl group.

When each R is a hydrocarbyl group, the terminating agent includes three independently selected silicon-bonded hydrocarbyl groups represented by R and one silicon-bonded halogen atom represented by X. The second silane compound in this first embodiment may be referred to as a triorganohalosilane.

Depending on a selection of R and X, the terminating agent may be exemplified by trimethylchlorosilane, dimethylethylchlorosilane, trimethylfluorosilane, methyldipropylchlorosilane, dimethylphenylchlorosilane, etc. Combinations of different triorganohalosilanes may be utilized together as the terminating agent.

In certain embodiments of the inventive method, the terminating agent is incorporated into the organopolysiloxane as a terminal group, i.e., an M unit, as described below.

Combinations of different terminating agents may be utilized together as the terminating agent in the inventive method.

Further, as introduced above, the organopolysiloxane is polymerized in the presence of a catalyst. The catalyst may be any catalyst suitable for polymerizing the organopolysiloxane in the presence of a terminating agent.

In certain embodiments, the catalyst comprises a phosphazene catalyst, which generally includes at least one -(N=P<)- unit (i.e., a phosphazene unit) and is usually an oligomer having up to 10 such phosphazene units, for example having an average of from 1.5 up to 5 phosphazene units. The phosphazene catalyst may be, for example, a halophosphazene, particularly a chlorophosphazene (phosphonitrile chloride), an oxygen-containing halophosphazene, an ionic derivative of a phosphazene such as a phosphazenium salt, particularly an ionic derivative of a phosphonitrile halide such as a perchlorooligophosphazenium salt, or a partially hydrolyzed form thereof.

Suitable phosphazene catalysts also include phosphonitrile chlorides, for example those prepared according to U.S. Pat. Nos. 3,839,388 and 4,564,693 which are incorporated by reference herein in their entirety. For example, in one embodiment, the phosphonitrile chloride has the general formula [X(PX₂ =N)PX₃]⁺ [MX₍ᵥ₋ₜ₊₁₎R'ₜ]⁻, wherein X is an independently selected halogen atom, M is P or an element having an electronegativity of from 1.0 to 2.0 according to Pauling's scale, R' is an alkyl group having up to 12 carbon atoms, n has a value of from 1 to 6, v is the valence or oxidation state of M and t has a value of from 0 to v-1.

In specific embodiments, the phosphazene catalyst is further defined as a phosphonitrilehalide catalyst and has one of the general formulas (I)-(IV):

[PX₃=N(-PX₂=N)ₓ-PX₃]⁺[PX₆]⁻ (I)

[PX₃=N(-PX₂=N)ₓ-PX₃]⁺[X]⁻ (II)

[PX₃=N(-PX₂=N)ₓ-P(=O)X₂] (III)

[P(OPH)X₂=N(-PX₂=N)ₓ-P(=O)X₂] (IV)

wherein each X is independently a halogen atom; and subscript x is from 0 to 2.

Combinations of different phosphazene catalyst may be utilized together in the inventive method. Further, the phosphazene catalyst may be utilized in combination with other catalysts, e.g. conventional catalysts for condensation reactions. For the purposes of this disclosure, water is not considered a catalyst, and is outside the scope of the term "catalyst" as used herein.

The inventive method is typically carried out in a vessel, e.g. a reactor, where the organopolysiloxane fluid is polymerized in the presence of the terminating agent and the catalyst. The components (i.e., the organopolysiloxane fluid, the terminating agent, and the catalyst) may be fed together or separately to the vessel, or may be disposed in the vessel in any order of addition. Typically, the organopolysiloxane fluid and the terminating agent are fed to the vessel separately from the catalyst so as to prevent premature polymerization of the organopolysiloxane fluid before reaching the vessel. Individual components may be fed to the vessel sequentially over time or at once.

The relative amounts of the organopolysiloxane fluid and terminating agent may vary based on a desired structure or formula associated with the organopolysiloxane.

For example, molecular weight and structure associated with the organopolysiloxane formed via the inventive method may be controlled as desired based on the relative amount and selection of the organopolysiloxane fluid and the terminating agent, as the polymerization of the organopolysiloxane fluid is generally terminated and the organopolysiloxane is capped with the terminating agent.

As one example, increasing the relative amount of the organopolysiloxane fluid as compared to the terminating agent results in an organopolysiloxane having a greater viscosity. Alternatively, the organopolysiloxane fluid may have a greater initial viscosity based on a selection of y such that the relative amount of the organopolysiloxane fluid to be polymerized to provide the same organopolysiloxane is less. Alternatively still, when y is sufficiently low in the organopolysiloxane fluid and a high viscosity organopolysiloxane is desired, the relative amount of the organopolysiloxane fluid to the terminating agent is increased.

The molar ratio of the organopolysiloxane fluid to the terminating agent in the mixture is generally >1 : 1, alternatively ≥1.5 : 1, alternatively ≥5 : 1, alternatively ≥10 : 1, alternatively ≥20 : 1, alternatively ≥30 : 1, alternatively ≥40 : 1. In specific embodiments, the molar ratio of the organopolysiloxane fluid to the terminating agent in the mixture is from >1 : 1 to 10 : 1, alternatively from >1 : 1 to 5 : 1. As introduced above, this molar ratio may vary greatly depending on the organopolysiloxane fluid utilized and the desired organopolysiloxane prepared therefrom. For example, as subscript y is increased in the organopolysiloxane fluid, this molar ratio may decrease while still providing organopolysiloxanes having similar degrees of polymerization and associated viscosities.

The catalyst is typically present in a catalytic amount. In certain embodiments, the catalyst is present in an amount of from 1 to 200 parts per million based on the combined weight of the organopolysiloxane fluid and the terminating agent in the vessel.

The inventive method is free from introducing water discretely to hydrolyze the terminating agent. "Introducing water discretely," as used herein, means introducing water into the vessel to hydrolyze the terminating agent.

Although the inventive method is free from introducing water discretely to hydrolyze the terminating agent, the terminating agent is generally hydrolyzed with water. In particular, the silicon-bonded halogen atom of the terminating agent generally hydrolyzes to give a silanol group (SiOH), which may subsequently condense with a silicon-bonded hydroxyl group during polymerization of the organopolysiloxane fluid to cap the organopolysiloxane. As such, the terminating agent generally is incorporated into the organopolysiloxane as a triorganosiloxy terminal group.

Typically in the method, water is generated in situ via condensation from polymerizing the organopolysiloxane fluid. In particular, water is a byproduct from condensing silanol groups, which form a siloxane bond (Si-O-Si) with water as a byproduct. As such, in the inventive method, any water for hydrolyzing the terminating agent may be generated in situ from polymerizing the organopolysiloxane fluid in the presence of the catalyst and the terminating agent. Once water is produced as a byproduct of polymerization of the organopolysiloxane fluid, the water can hydrolyze the terminating agent such that the terminating agent once hydrolyzed has the general formula R3SiOH, where R is independently selected and defined above. Depending on a selection of X in the terminating agent, an acid, e.g. hydrochloric acid when X is Cl, may also be generated as a byproduct from hydrolyzing the terminating agent with water formed in situ from polymerization the organopolysiloxane fluid.

Because water is generated in situ, even though the inventive method is typically substantially free from introducing water into the vessel, water is present in the vessel after initiation of polymerization of the organopolysiloxane fluid.

Physical properties within the vessel may be modified or controlled as desired. For example, the vessel may optionally be heated, cooled, pressurized, etc. The vessel may be closed or open to atmospheric conditions. The vessel may be a continuously stirred tank reactor (CSTR), and may utilize a vacuum. In certain embodiments, the inventive method is carried out an elevated temperature. The elevated temperature may be, for example, from 40 to 200, alternatively from 50 to 160, alternatively from 70 to 130, °C.

Generally, the organopolysiloxane fluid and the terminating agent are combined prior to being disposed in the vessel or in the vessel to give a mixture. The mixture is separated from the catalyst to prevent premature polymerization of the organopolysiloxane fluid. The mixture may be at the elevated temperature when disposed in the vessel, as the organopolysiloxane fluid and the terminating agent may be independently heated or cooled prior to, during, or after introduction into the vessel. Typically, the mixture is formed in the vessel at ambient temperature, and the method further comprises heating the mixture form ambient temperature to the elevated temperature. In these embodiments, the catalyst may be combined with the mixture prior to, during, and/or after heating to the elevated temperature. Generally, the catalyst is disposed in the vessel and combined with the mixture during the step of heating the contents of the vessel to the elevated temperature.

If desired, a medium other than water may be present in the vessel during polymerization. For example, a solvent, vehicle, or diluent may be present in the vessel. If present, the solvent, vehicle, or diluent is typically water-soluble. A liquid diluent can for example be a solvent for the organopolysiloxane fluid and/or the terminating agent or can be a non-solvent. The diluent can be a silicone based and/or organic based diluent and is generally chosen to have no groups reactive with the organopolysiloxane fluid and/or the terminating agent. The diluent may be chosen from materials whose presence is desired as an extender and/or plasticizer in the end product formulation based on the branched organopolysiloxane produced. In certain embodiments, the vessel and method are free from such organic solvents, vehicles, or diluents.

The period of time during which polymerization in the vessel is carried out may also vary. In certain embodiments, it is desirable to minimize the period of time. The period of time may be from greater than 0 to 24, alternatively from greater than 0 to 18, alternatively from 0 to 12, alternatively from 0 to 10, alternatively from 0 to 8, alternatively from 0 to 6, alternatively from 0 to 4, alternatively from 0 to 2, alternatively from 0 to 1, hours. In other embodiments, the period of time may be from greater than 0 to 60, alternatively from greater than 0 to 50, alternatively from greater than 0 to 40, alternatively from greater than 0 to 30, alternatively from greater than 0 to 20, alternatively from greater than 0 to 10, minutes. The inventive method may be a batch, semi-batch, or continuous process, in which case the period of time above relates to the residence time in the vessel. However, the inventive method is typically a batch process.

The inventive method typically prepares the organopolysiloxane in a reaction product. The reaction product includes byproducts, unreacted organopolysiloxane fluid and/or terminating agent from the mixture, water, acid, etc. Examples of byproducts include siloxane compounds other than the organopolysiloxane. For example, siloxane compounds may include cyclic siloxanes, and hydroxyl-functional organopolysiloxanes distinguished from the organopolysiloxane. The reaction product is generally a fluid mixture, but may be heterogeneous or in the form of an emulsion. Generally, there is phase separation between an aqueous phase and a non-aqueous phase, with the organopolysiloxane and other siloxane byproducts being present in the non-aqueous phase.

The reaction product typically includes the organopolysiloxane in an amount of from greater than 0 to less than 100, alternatively from greater than 20 to less than 100, alternatively from greater than 40 to less than 100, alternatively from greater than 60 to less than 100, alternatively from greater than 80to less than 1 00, alternatively from greater than 90 to less than 100, alternatively from greater than 95 to less than 100, alternatively from greater than 99 to less than 1 00, weight percent based on the total weight of all siloxane compounds present in the reaction product. Siloxane compounds are those which include at least one siloxane bond (Si-O-Si). As such, this basis excludes water and other components/byproducts from the inventive method to prepare the organopolysiloxane.

In certain embodiments, the organopolysiloxane has the general formula

R₃Si(OSiR₂)_{y'}OSiR₃

wherein R is defined above, and y' is an integer of from 3 to 2,000. The value of y' may be referred to as the degree of polymerization (DP) of the organopolysiloxane.

The method of any one preceding claim further comprising neutralizing the organopolysiloxane (and/or the reaction product) with a neutralizing agent. The neutralizing agent may be any neutralizing agent suitable to neutralize the organopolysiloxane and/or the reaction mixture. In various embodiments, the neutralizing agent comprises a tertiary amine, which has the general formula NR₃, where R is independently selected and defined above. Specific examples of suitable tertiary amines include trimethylamine, trimethylamine, tripopylamine, tributylamine, trihexylamine, methylpropylhexylamine, hydroxylated tertiary amines (e.g. triethanolamine), heterocyclic tertiary amines (e.g. pyridine), alkyl derivatives (e.g. lutidines and picolines), etc. Alternatively, inorganic compounds such as calcium carbonate may be utilized as the neutralizing agent.

If utilized, the neutralizing agent is employed in an amount corresponding to the quantity of acid liberated via polymerization or in a slight excess. As such, the relative amount of neutralizing agent utilized is contingent in part on the amount of terminating agent utilized, as the terminating agent liberates acid via its hydrolysis. Typically, the molar ratio of the neutralizing agent utilized is at least 1:1, alternatively at least 1.2:1, alternatively at least 1.3:1, alternatively at least 1.4:1, alternatively at least 1.5:1, moles of neutralizing agent to moles of acid present in the reaction product.

In certain embodiments, the method comprises isolating the non-aqueous phase from the reaction product. For example, the phases of the reaction product may be separated via any suitable technique, e.g. decanting, centrifuging, distilling, or otherwise isolating the non-aqueous phase from the aqueous phase of the reaction product. As introduced above, the siloxane compounds, including the organopolysiloxane, are present in the non-aqueous phase. The non-aqueous phase may be referred to as the bulk fluid. If desired, salts, e.g. metal halide salts, may be utilized in connection with phase separation. However, use of such salts is generally not necessary and in certain embodiments the method is free from utilizing salts to aid with phase separation.

The bulk fluid may be utilized in various end use applications, e.g. as a silicone fluid, grease, solvent, vehicle, etc. Alternatively, the bulk fluid, which comprises the organopolysiloxane, may be combined with or incorporated into another composition, e.g. a personal care composition.

However, in certain embodiments, the method further comprises isolating the organopolysiloxane from the reaction product. The organopolysiloxane may be isolated from the reaction product, from the bulk fluid, etc. For example, the bulk fluid may be first separated from the aqueous phase, and the organopolysiloxane may be isolated from the bulk fluid. Alternatively, the organopolysiloxane may be isolated from the reaction product without separation of the bulk fluid from the aqueous phase.

As with the separation of the bulk fluid and the aqueous phase, the organopolysiloxane may be isolated via any suitable technique. In certain embodiments, isolating the organopolysiloxane comprises distilling the reaction product and/or the bulk fluid to separate the organopolysiloxane therefrom.

Conditions associated with distillation of the bulk fluid or reaction product to isolate the organopolysiloxane therefrom may vary based on the organopolysiloxane prepared via the inventive method. For example, when subscript y' is exceeding high, e.g. 1,500, the corresponding organopolysiloxane has a low volatility, particularly as compared to other byproducts present in the reaction product or bulk fluid.

After isolating the organopolysiloxane from the reaction product and/or the bulk fluid, an organopolysiloxane composition is obtained. The organopolysiloxane composition comprises the organopolysiloxane in an amount of at least 50, alternatively at least 60, alternatively at least 70, alternatively at least 80, alternatively at least 85, alternatively at least 90, alternatively at least 95, alternatively at least 96, alternatively at least 97, alternatively at least 98, alternatively at least 99, alternatively at least 99.9, wt.% based on the total weight of the organopolysiloxane composition.

However, in other embodiments, the method is free from distilling the reaction product or bulk fluid to isolate the organopolysiloxane.

As introduced above, in certain embodiments the organopolysiloxane fluid has a degree of polymerization from 1 to 200, whereas the organopolysiloxane has a degree of polymerization from 3 to 2,000. The degree of polymerization of the organopolysiloxane is greater than the degree of polymerization of the organopolysiloxane fluid. For example, when the degree of polymerization of the organopolysiloxane fluid is 5, the degree of polymerization of the organopolysiloxane is generally at least 10 (due to two adjacent molecules of the organopolysiloxane fluid bonding to one another). Of course, a mixture of different organopolysiloxane fluids having different degrees of polymerization may be utilized. However, as but one example, when the degree of polymerization of the organopolysiloxane fluid is "X," the degree of polymerization of the organopolysiloxane is >X.

The viscosity of the organopolysiloxane is also greater than that of the organopolysiloxane fluid.

In certain embodiments, the organopolysiloxane has a kinematic viscosity of from 500 to 100,000 cSt at 25 °C depending on a selection of subscript n. However, if desired, organopolysiloxanes may be prepared having a kinematic viscosity of much greater than 100,000 cSt at 25 °C; for example, the organopolysiloxane may have a kinematic viscosity of up to 2,000,000 cSt at 25 °C. As readily understood in the art, kinematic viscosity of a fluid may be measured in accordance with ASTM D-445 (2011), entitled "Standard Test Method for Kinematic Viscosity of Transparent and Opaque Liquids (and Calculation of Dynamic Viscosity)."

The inventive method prepares organopolysiloxanes which may have selectively controlled properties, including molecular weight and viscosity. Moreover, the inventive method prepares organopolysiloxanes from organopolysiloxane fluids, rather than from monomeric silanes. Further, the inventive method does not require the discrete introduction of water, which further reduces costs and steps associated with the inventive method. In addition, the inventive method minimizes or eliminates generation of undesirable byproducts, such a cyclic siloxanes or volatile components, which generally necessitate stripping of the reaction product for removal. Thus, as introduced above, method may be free from distilling the reaction product or bulk fluid to isolate the organopolysiloxane, reducing cost and time as compared with conventional reactions and processes.

It is to be understood that the appended claims are not limited to express and particular compounds, compositions, or methods described in the detailed description, which may vary between particular embodiments which fall within the scope of the appended claims. With respect to any Markush groups relied upon herein for describing particular features or aspects of various embodiments, different, special, and/or unexpected results may be obtained from each member of the respective Markush group independent from all other Markush members. Each member of a Markush group may be relied upon individually and or in combination and provides adequate support for specific embodiments within the scope of the appended claims.

Further, any ranges and subranges relied upon in describing various embodiments of the present invention independently and collectively fall within the scope of the appended claims, and are understood to describe and contemplate all ranges including whole and/or fractional values therein, even if such values are not expressly written herein. One of skill in the art readily recognizes that the enumerated ranges and subranges sufficiently describe and enable various embodiments of the present invention, and such ranges and subranges may be further delineated into relevant halves, thirds, quarters, fifths, and so on. As just one example, a range "of from 0.1 to 0.9" may be further delineated into a lower third, i.e., from 0.1 to 0.3, a middle third, i.e., from 0.4 to 0.6, and an upper third, i.e., from 0.7 to 0.9, which individually and collectively are within the scope of the appended claims, and may be relied upon individually and/or collectively and provide adequate support for specific embodiments within the scope of the appended claims. In addition, with respect to the language which defines or modifies a range, such as "at least," "greater than," "less than," "no more than," and the like, it is to be understood that such language includes subranges and/or an upper or lower limit. As another example, a range of "at least 10" inherently includes a subrange of from at least 10 to 35, a subrange of from at least 10 to 25, a subrange of from 25 to 35, and so on, and each subrange may be relied upon individually and/or collectively and provides adequate support for specific embodiments within the scope of the appended claims. Finally, an individual number within a disclosed range may be relied upon and provides adequate support for specific embodiments within the scope of the appended claims. For example, a range "of from 1 to 9" includes various individual integers, such as 3, as well as individual numbers including a decimal point (or fraction), such as 4.1, which may be relied upon and provide adequate support for specific embodiments within the scope of the appended claims.

The following examples are intended to illustrate the invention and are not to be viewed in any way as limiting to the scope of the invention.

### EXAMPLES

Organopolysiloxanes are prepared in accordance with the inventive method.

### Examples 1-5:

In Examples 1-5, an organopolysiloxane fluid and a terminating agent are disposed in a vessel at ambient temperature to give a mixture. The contents of the reactor are stirred for 30 minutes, put under vacuum, and heated to around 100 °C. Viscosity of the contents of the reactor began to increase once the temperature of the vessel reached about 80 °C. Once the contents of the reactor reached about 90 °C, a catalyst is disposed in the vessel, which led to the evolution of water in the reactor and a rapid increase in viscosity. No water is discretely introduced into the vessel and is only formed in situ within the vessel. The rise in viscosity slowed significantly after about 5 minutes after disposing the catalyst in the vessel, but continued to rise slowly. After completing polymerization, an organopolysiloxane is prepared. Polymerization is allowed to continue for 60-90 minutes, but polymerization generally ceased after about 5 minutes in the vessel. The organopolysiloxane is neutralized with 0.5 mL trihexylamine to give a colorless cloudy polymer.

Table 1 below sets forth various information regarding the organopolysiloxane fluid, terminating agent, and catalyst, along with relative amounts thereof utilized in each of Examples 1-5.

**Table 1:**

| Example | Organopolysiloxane fluid (g) | Terminating Agent (g) | Catalyst (µL) |
|---|---|---|---|
| 1 | 1,400 | 20 | 20 |
| 2 | 1,400 | 10 | 20 |
| 3 | 1,400 | 10 | 20 |
| 4 | 1,400 | 7 | 20 |
| 5 | 1,400 | 10 | 20 |

The organopolysiloxane fluid has the general formula OH(CH₃)₂Si(OSi(CH₃)₂)_{y}OSi(CH₃)₂OH, where y is from 1 to 200. The silanol and NVC content of the organopolysiloxane prepared in each example is also identified in Table 1 above.

The terminating agent is trimethylchlorosilane ((CH₃)₃SiCl).

The catalyst is [PCl₃=N(-PCl₂=N)ₓ-PCl₃]⁺[PCl₆]⁻.

Table 2 below sets forth the predicted unstripped viscosity of each organopolysiloxane formed in Examples 1-5 and the measured viscosity of each organopolysiloxane formed in Examples 1-5. Predicted unstripped viscosities are calculated based on theoretical conversion based on the feed identified in Table 1 and silanol content. The viscosity is measured via a Brookfield viscometer in accordance with ASTM D4287. Table 2 also sets forth the silanol content of each organopolysiloxane formed in Example 1-5, which is measured via Fourier Transform Infrared Spectroscopy (FTIR) in accordance with ASTM E-168. Finally, Table 2 includes non-volatile content (NVC) of each reaction product, which is determined by placing 2 grams of the reaction product in 2-inch aluminum pan heated to 150° C for 2 hours.

**Table 2:**

| Example | Predicted Unstripped Viscosity (cSt) | Measured Viscosity (cSt) | Nonvolatile Content (NVC %) | Silanol Content (ppm) |
|---|---|---|---|---|
| 1 | 585 | 714 | 96.1.5 | 81 |
| 2 | 2,908 | 3,238 | 96.43 | 99 |
| 3 | 2,441 | 3,583 | 94.46 | 108 |
| 4 | 7,001 | 9,164 | 95.15 | 86 |
| 5 | 3,125 | 3,834 | 96.43 | 68 |

As made clear in Table 2 above, decreasing the relative amount of the terminating agent utilized, as in Example 4, increases a viscosity (and molecular weight) of the resulting organopolysiloxane. In contrast, increasing the relative amount of the terminating agent utilized, as in Example 1, decreases a viscosity (and molecular weight) of the resulting organopolysiloxane.

The invention has been described in an illustrative manner, and it is to be understood that the terminology which has been used is intended to be in the nature of words of description rather than of limitation. Obviously, many modifications and variations of the present invention are possible in light of the above teachings. The invention may be practiced otherwise than as specifically described.

## Claims

1. A method of preparing an organopolysiloxane, said method comprising:
polymerizing an organopolysiloxane fluid having at least two silicon-bonded hydroxyl groups per molecule in the presence of a catalyst and a terminating agent having the general formula R₃SiX, wherein each R is independently selected from H and a hydrocarbyl group and X is a halogen atom, to provide the organopolysiloxane;
wherein the method is free from introducing water discretely to hydrolyze the terminating agent, wherein introducing water discretely means introducing water into the vessel.

2. The method of claim 1 wherein the catalyst comprises a phosphonitrilehalide catalyst.

3. The method of claim 1 or 2 wherein the catalyst has one of the general formulas (I)-(IV):
[PX₃=N(-PX₂=N)ₓ-PX₃]⁺[PX₆]⁻ (I)
[PX₃=N(-PX₂=N)ₓ-PX₃]⁺[X]⁻ (II)
[PX₃=N(-PX₂=N)ₓ-P(=O)X₂] (III)
[P(OH)X₂=N(-PX₂=N)ₓ-P(=O)X₂] (IV)
wherein each X is independently a halogen atom; and subscript x is from 0 to 2.

4. The method of claim 3 wherein water is generated in situ via condensation from polymerizing the organopolysiloxane fluid.

5. The method of any one preceding claim wherein the organopolysiloxane fluid has the general formula
OHₐR₃₋ₐSi(OSiR₂)_{y}OSiR_{3-b}OH_{b}
wherein a is an integer of 1 to 3, b is an integer of 1 to 3, R is defined above, and y is an integer of from 1 to 200.

6. The method of any one preceding claim wherein the organopolysiloxane fluid and the terminating agent are first combined to form a mixture and wherein the catalyst is combined with the mixture.

7. The method of claim 6 further comprising the step of heating the mixture from ambient temperature to an elevated temperature of 40 to 200°C, and wherein the catalyst is combined with the mixture during the step of heating.

8. The method of claim 7 wherein the elevated temperature is from 70 to 130 °C.

9. The method of any one preceding claim further comprising isolating the organopolysiloxane.

10. The method of any one preceding claim further comprising neutralizing the organopolysiloxane with a neutralizing agent.

11. The method of claim 10 wherein the neutralizing agent comprises a tertiary amine compound.

12. The method of any one preceding claim wherein the organopolysiloxane fluid and the terminating agent are utilized in an amount of at least 1 : 1 moles of the organopolysiloxane fluid to the terminating agent.

13. The method of any one preceding claim wherein the organopolysiloxane has the general formula
R₃Si(OSiR₂)_{y'}OSiR₃
wherein R is defined above, and y' is an integer of from 3 to 2,000.

## Patentansprüche

1. Ein Verfahren zum Herstellen eines Organopolysiloxans, wobei das Verfahren Folgendes beinhaltet:
Polymerisieren eines Organopolysiloxanfluids mit mindestens zwei siliciumgebundenen Hydroxylgruppen pro Molekül in Gegenwart eines Katalysators und eines Abbruchmittels mit der Allgemeinformel R₃SiX, wobei jedes R unabhängig aus H und einer Hydrocarbylgruppe ausgewählt ist und X ein Halogenatom ist, um das Organopolysiloxan bereitzustellen;
wobei das Verfahren frei von getrenntem Einführen von Wasser ist, um das Abbruchmittel zu hydrolysieren, wobei getrenntes Einführen von Wasser das Einführen von Wasser in das Gefäß bedeutet.

2. Verfahren gemäß Anspruch 1, wobei der Katalysator einen Phosphonitrilhalogenidkatalysator beinhaltet.

3. Verfahren gemäß Anspruch 1 oder 2, wobei der Katalysator eine der Allgemeinformeln (I)-(IV) aufweist:
[PX₃=N(-PX₂=N)ₓ-PX₃]+[PX₆]⁻ (I)
[PX₃=N(-PX₂=N)ₓ-PX₃]+[X]⁻ (II)
[PX₃=N(-PX₂=N)ₓ-P(=O)X₂] (III)
[P(OH)X₂=N(-PX₂=N)ₓ-P(=O)X₂] (IV)
wobei jedes X unabhängig ein Halogenatom ist; und Index x von 0 bis 2 beträgt.

4. Verfahren gemäß Anspruch 3, wobei Wasser in situ durch Kondensation vom Polymerisieren des Organopolysiloxanfluids erzeugt wird.

5. Verfahren gemäß einem der vorhergehenden Ansprüche, wobei das Organopolysiloxanfluid die folgende Allgemeinformel aufweist:
OHₐR₃₋ₐSi(OSiR₂)yOSiR_{3-b}OH_{b}
wobei a eine ganze Zahl von 1 bis 3 ist, b eine ganze Zahl von 1 bis 3 ist, R oben definiert ist und y eine ganze Zahl von 1 bis 200 ist.

6. Verfahren gemäß einem der vorhergehenden Ansprüche, wobei das Organopolysiloxanfluid und das Abbruchmittel zuerst vereinigt werden, um eine Mischung zu bilden, und wobei der Katalysator mit der Mischung vereinigt wird.

7. Verfahren gemäß Anspruch 6, das ferner den Schritt des Erhitzens der Mischung von Umgebungstemperatur auf eine erhöhte Temperatur von 40 bis 200 °C beinhaltet, und wobei der Katalysator während des Schritts des Erhitzens mit der Mischung vereinigt wird.

8. Verfahren gemäß Anspruch 7, wobei die erhöhte Temperatur von 70 bis 130 °C beträgt.

9. Verfahren gemäß einem der vorhergehenden Ansprüche, das ferner das Isolieren des Organopolysiloxans beinhaltet.

10. Verfahren gemäß einem der vorhergehenden Ansprüche, das ferner das Neutralisieren des Organopolysiloxans mit einem Neutralisationsmittel beinhaltet.

11. Verfahren gemäß Anspruch 10, wobei das Neutralisationsmittel eine tertiäre Aminverbindung beinhaltet.

12. Verfahren gemäß einem der vorhergehenden Ansprüche, wobei das Organopolysiloxanfluid und das Abbruchmittel in einer Menge von mindestens 1 : 1 Mol des Organopolysiloxanfluids zu dem Abbruchmittel benutzt werden.

13. Verfahren gemäß einem der vorhergehenden Ansprüche, wobei das Organopolysiloxan die folgende Allgemeinformel aufweist:
R₃Si(OSiR₂)_{y}'OSiR₃,
wobei R oben definiert ist, und y' eine ganze Zahl von 3 bis 2000 ist.

## Revendications

1. Un procédé de préparation d'un organopolysiloxane, ledit procédé comprenant :
la polymérisation d'un fluide organopolysiloxane ayant au moins deux groupes hydroxyle liés au silicium par molécule en présence d'un catalyseur et d'un agent de terminaison ayant la formule générale R₃SiX, où chaque R est indépendamment sélectionné parmi H et un groupe hydrocarbyle et X est un atome d'halogène, pour fournir l'organopolysiloxane ;
où le procédé est exempt d'introduction d'eau discrètement pour hydrolyser l'agent de terminaison, où l'introduction d'eau discrètement signifie l'introduction d'eau dans le récipient.

2. Le procédé de la revendication 1 où le catalyseur comprend un catalyseur halogénure de phosphonitrile.

3. Le procédé de la revendication 1 ou de la revendication 2 où le catalyseur a l'une des formules générales (I) à (IV) :
[PX₃=N(-PX₂=N)ₓ-PX₃]⁺[PX₆]⁻ (1)
[PX₃=N(-PX₂=N)ₓ-PX₃]⁺[X]⁻ (II)
[PX₃=N(-PX₂=N)ₓ-P(=O)X₂] (III)
[P(OH)X₂=N(-PX₂=N)ₓ-P(=O)X₂] (IV)
où chaque X est indépendamment un atome d'halogène ; et l'indice x va de 0 à 2.

4. Le procédé de la revendication 3 où l'eau est générée in situ par le biais d'une condensation provenant de la polymérisation du fluide organopolysiloxane.

5. Le procédé de n'importe quelle revendication précédente où le fluide organopolysiloxane a la formule générale
OHₐR₃₋ₐSi(OSiR₂)_{y}OSiR_{3-b}OH_{b}
où a est un nombre entier de 1 à 3, b est un nombre entier de 1 à 3, R est défini ci-dessus, et y est un nombre entier allant de 1 à 200.

6. Le procédé de n'importe quelle revendication précédente où le fluide organopolysiloxane et l'agent de terminaison sont tout d'abord combinés pour former un mélange et où le catalyseur est combiné avec le mélange.

7. Le procédé de la revendication 6 comprenant en outre l'étape consistant à chauffer le mélange de la température ambiante à une température élevée de 40 à 200 °C, et où le catalyseur est combiné avec le mélange durant l'étape consistant à chauffer.

8. Le procédé de la revendication 7 où la température élevée est de 70 à 130 °C.

9. Le procédé de n'importe quelle revendication précédente comprenant en outre l'isolation de l'organopolysiloxane.

10. Le procédé de n'importe quelle revendication précédente comprenant en outre la neutralisation de l'organopolysiloxane avec un agent de neutralisation.

11. Le procédé de la revendication 10 où l'agent de neutralisation comprend un composé amine tertiaire.

12. Le procédé de n'importe quelle revendication précédente où le fluide organopolysiloxane et l'agent de terminaison sont utilisés en une quantité d'au moins 1/1 mole du fluide organopolysiloxane à l'agent de terminaison.

13. Le procédé de n'importe quelle revendication précédente où l'organopolysiloxane a la formule générale
R₃Si(OSiR₂)_{y'}OSiR₃
où R est défini ci-dessus, et y' est un nombre entier allant de 3 à 2 000.
